# EUROPEAN PATENT SPECIFICATION

(11) **EP 1 790 930 B1**
(45) Date of publication and mention of the grant of the patent: **09.03.2011**
(21) Application number: 05425847.0
(22) Date of filing: 29.11.2005
(51) Int. Cl.: F27B 1/21, F27D 19/00, F27D 21/00, C04B 7/36

(54) **Method for the control and command of a kiln for the burning of lumped material and the relative kiln**
Verfahren zur Kontrolle und Steuerung eines Ofens zum Brennen von stückigem Material und der entsprechende Ofen
Procédé pour le contrôle et la commande d'un four pour la cuisson de matériau en morceaux et le four correspondant

(43) Date of publication of application: 30.05.2007
(73) Proprietor: Trading Engineering Technologies LLC, Lewes 19958 (US)
(72) Inventor: Foster, John B., Las Cumbres, Casa C-217 City of Panama (PA)
(74) Representative: Long, Giorgio

(56) References cited:
- DE-B1- 1 571 341

## Description

### INVENTION FIELD

The present invention refers to a method for the control and command of a kiln for the burning of lumped material. In particular, the invention is about a method of control and command of a kiln for the burning and the sintering of lumped material, such as limestone, dolomite and similar, that permits a deep control of the quantity and quality of the burnt material.

### STATE OF THE ART

The lime kilns always need better and better control systems to monitor the production quantity and moreover the products quality in order to produce lime with characteristics of purity and/or reactivity suitable to meet the different needs of the lime, paper, steel, chemical, minerals, sugar, bauxite, agricultural and building industries.

The production of lime derives from the well known burning process (calcination) of natural limestone CaCO₃ to obtain lime CaO thanks to the reaction:

CaCO₃ + heat -> CaO + CO₂

Usually realized in shaft kilns with circular, semicircular, elliptical, square or rectangular section, a double shaft kiln, regenerative kiln or annular kiln.

In particular, the limestone, dolomite or similar lumped materials are charged from the top of a kiln that extends along a longitudinal axis almost vertical. The material passes from the top to the bottom through a pre-heating zone, a calcination zone included between two or three levels of burners, a post-calcination zone, a cooling zone and a discharging zone of the calcined material.

Therefore, the quantity and quality of the lime that is obtained come from the different steps of treatment that the lumped material undergoes in the different zones inside the kiln. It is therefore important to check the operating conditions of the kiln in the best possible way in order to be able to effective operate in case of anomalies in the production process and to grant a constant quantity and quality of the final product.

Nowadays, a method to control substantially automatically neither the final product quantity obtained nor the material quality does not exist.

### SUMMARY OF THE INVENTION

The problem at the basis of this invention is therefore in general that to provide a method of control and command a kiln for the burning of lumped materials that permits to check the quantity and the quality of the final product.

This problem is solved by an automatic method of control and command of the burning product of a kiln for the burning of lumped materials as described in the enclosed main claim.

A first object of the invention is that to provide a method of control and command of a kiln for the burning of lumped material.

A second object of the invention is a kiln for the burning of lumped material that permits to check the production of the materials for the above mentioned fields.

### BRIEF DESCRIPTION OF THE DRAWINGS

Additional advantages and characteristics of this invention will be more evident with the following detailed description of the invention, given as a not-limitative example, with reference to the following figures, where:
- Fig.1 represents a schematic view of a kiln for the burning of lumped material;
- Fig.2 represents a particular of the kiln in fig.1 regarding the discharge zone;
- Fig.3 represents a block diagram of the operating control of the kiln in fig.1.

### DETAILED DESCRIPTION OF THE INVENTION

The basic idea of this invention is to design a method that permits to control in an easy, constant and automatic way the quantity and/or quality of the final product obtained from the burning of the lumped materials.

In fact, it has been observed that the quantity of the burnt product can change a lot in a specific period of time in relation with the different conditions of the kiln, such as the charging of the material to be burnt, the residence time at the different treatment zones, the efficiency of the combustion reaction and others more. Furthermore, the quality of the final product can also appreciable vary according to the degree of burning of the raw materials.

In particular, it has been observed that the material can be exposed to a not uniform thermal treatment along the whole path in the kiln, so that final products can be obtained with variable quantities of the components. For example, during the burning process of the limestone or dolomite materials for the production of lime, some zones of the kiln can be influenced by the winds that cool down the external wall of the kiln. In this case, in this specific zone the combustion temperature may decrease, even a lot. In comparison to the opposite zone not influenced by the winds. As consequence of this, the lime should have been subjected to a lower calcination process in the zone influenced by the wind compared to the other one. In other words, In the zone influenced by the winds the limestone material will have lost less components compared to the protected one. It is obvious that the lime coming from the zone of the kin influenced by the winds will have an higher weight compared to the opposite zone because the lime will contain an higher quantity of residual components (specifically higher quantity of CaCO₃).

On the basis of this observation, a method of control and command of a kiln for the burning of lumped materials that permits to monitor the quantity and the quality of this burning material has been designed.

The method of control and command of the kiln for the burning of lumped materials according to this invention comprising the steps of:
a) providing a kiln having at least two sections ending with a respective discharge;
b) collecting of a prefixed volume unit of burnt material from each of the discharges;
c) weighing of this prefixed volume unit of burnt material;
d) sending an electric or electromagnetic signal to a control and command unit (CCU) indicating the weighing value for volume unit; and
e) comparing of the weighing value for prefixed volume unit with a pre-established weight value for this prefixed volume unit.

In general, if the value of the step c) would be higher than the prefixed value for the comparison, a visual monitoring and/or an intervention for maintenance, correction directly on the kiln regulation shall be done. The visual intervention permits to control, especially in the burning zones, if there are evident structural anomalies. Consequently, it is possible to act in the exact part of the kiln where the anomaly has been observed and perform the necessary maintenance and/or correction/s.

In particular, the step b) to collect a prefixed volume of burnt material can be made, for example, through volumetric means such as for example a volumetric table, well-known in the field, that will be described hereafter.

The weighing step c) can be made through weighing means such as weighing scales, well-known in the field too.

The step of sending an electrical or electro magnetic signal is carried out by sending, in a constant and automatic way, said signals to the control and command unit and subsequently herein elaborated into numerical values indicative of the weight of the burnt product collected by the collecting means.

The step d) can so be realized by a unit of control and command such as an electronic processor, whose detailed description will follow, that compares the numerical values taken form the signals coming from the weighing means with pre-fixed numerical values depending from the needs or the requirements. The comparison permits to point out in addition to the accurate and real quantity of product discharged by the kiln also the variations - more or less important - indicating the degree of the burnt products.

If for example the measured weight, at the given volume, would be higher than the pre-fixed numerical value it would mean that some limestone which is not burnt is in the product discharged by the kiln or, in other words, the final product still contains residual CO₂- This check can be realized automatically thanks to the unit of control and command.

Furthermore, using the principle of correlation between the constant volume and the correspondent weight, it means density equal to weight by volume, is possible to evaluate the density of the burnt product. If the density remains substantially the same for every discharge of material, it means that the kiln works uniformly. In particular, if a density is prefixed, it is possible to control in a constant and automatic way, if the final product corresponds to what is prefixed or if there are some relevant changes so that an intervention on the functioning of the kiln is required.

For example, in case when the kiln is used for the calcination, the standard value of the lime can be fixed as density comprises between 0.7 and 0.9 ton/m³. In this case, at the given discharged volume, the weight is controlled and the specific weight of the lime obtained by the calcination is therefore calculated. If the specific weight calculated is between the above range, it means that the lime is calcinated correctly. If the specific weight is higher than the above range, it means that the lime still contains residuals CO₂ or, in other words, a part of CaCO₃ has been not calcined and therefore something is wrong in the burning process.

Advantageously, the method of the invention can include a step of transmitting signals to means for the fuel distribution and/or means for the comburent distribution to regulate the burning of the material inside the kiln. Preferably, the signals are sent to burner beams comprising lances of fuel distribution and to injection conburent chambers coupled for each lance or group of lances. In particular, these signals can command control elements of the fuel or comburent supply, such as valves, at the level of each lance or group of lances and corresponding chambers.

This further step permits to Influence on the calcination reaction through the combustion regulation, varying the quantity and the ratio between fuel and comburent

The discharge and control device is actuated in two or more sections of the kiln correspondent to descendent calcining longitudinal portions for the lumped material. In this way, the discharge can be controlled at the same time in several portions of the kiln to check if the burning is homogeneous in the whole section of the kiln or if there are important variations. For example, in case of a kiln with a transversal section divided into four parts eachone ending with a discharge, the above described method can be carried out at the level of each discharge. As a consequence of this an even more precise regulation of the material discharge and the kiln control and command can be done through an intervention in each zone of the kiln where a deviation of the prefixed quantity of the discharged material or of the quality of the lime produced should be noticed.

Preferably, the method of the invention comprises also a step of control and command of the quantity of the pre-heated air fed to each lance or group of lances of the burner beams.

It is to be noticed that the method can include also other control and command steps, for example of the regulation of the exhaust gas discharge in the upper portion of the kiln, of the circulation of the cooling fluids of the parts exposed to high heating and other conventional operations of a kiln for the burning of the lumped material. The advantage of this control and command is that to obtain an integrated system complete of supervision and regulation of all the kiln parameters in a combined and synergic way in order to maintain the optimal conditions of kiln operation. These additional steps of command and control can be realized with an integrated management system working with an electronic support such as the electronic device of the command and control unit.

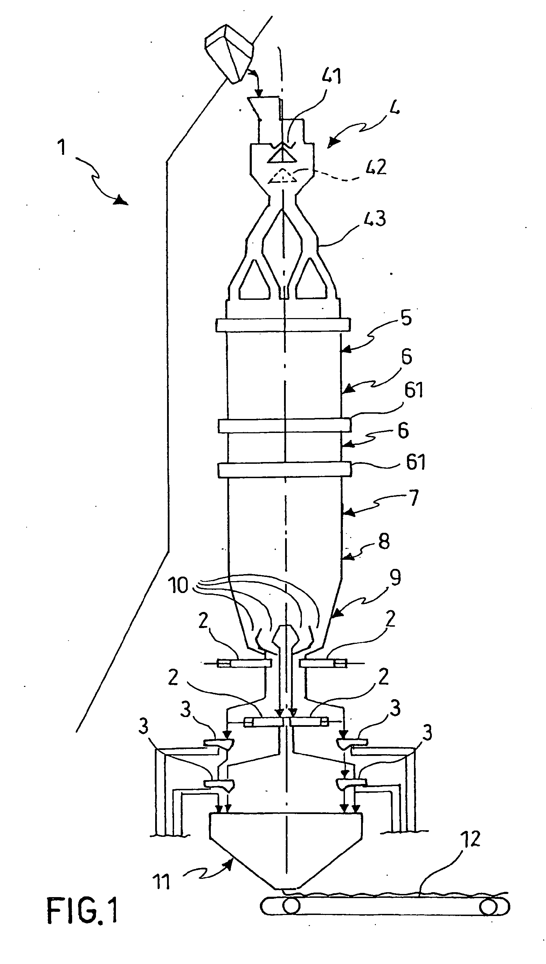

In accordance with the second object of the invention, with reference to the fig. 1-3, a kiln for the burning of lumped material will be now described.

In figure 1, a kiln for the burning of lumped material is schematically represented with the number of reference 1. The kiln 1 includes:
- at least two sections ending with a respective discharge;
said kiln comprising for each discharge:
- means (2) for the collection of a pre-established fixed volume of the lumped material after the calcination from each of the discharges;
- means (3) for the weighing of the materials collected by these said collecting means;
- means for the comparison of the weighting value for prefixed volume unit with pre-established weight value for this prefixed volume unit.

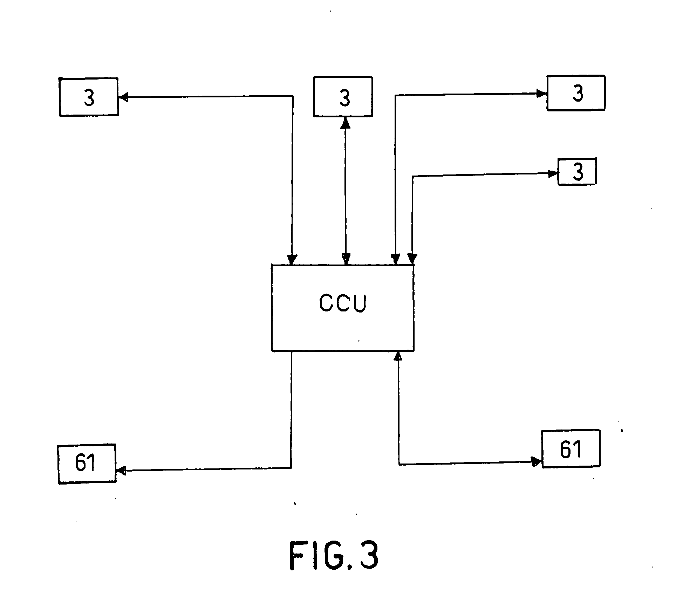

Preferably, the kiln 1 can furthermore, include a control and command unit CCU (schematically represented in fig.3) connected to these weighing means 3 in order to receive the electric signals representing numerical values referred to the weight of the collected material by the collecting means and compare them with pre-fixed numerical values indicating the weight of the material.

The kiln 1 can be any type of vertical kiln, as that one described in the introduction, for the burning of lumped material such as limestone or dolomite materials including, from the top to the bottom a charging zone 4, a pre-heating zone 6, a calcination zone 6, a post-calcination zone 7 (optional), a cooling zone 8 and a discharging zone 9.

The charging zone 4 can be equipped with a loading opening 41, equipped with a conical plug of closing/ opening 42 for the passage of lumped material. Preferably, under the gate 42, the lumped material is distributed to the pre-heating zone 5 inside the kiln through one or more pant legs 43 that can divide in secondary pant legs and allow the uniform distribution of the material in each portion of the cross section of the kiln.

The pre-heating zone 6 represents the zone where the materials are exposed at the rising hot exhaust gases produced in the combustion zone 6. In this way the material reaches the combustion or calcination zone already preheated and dried.

The calcination zone 6 represents the zone where there is the calcination or the burning of the lumped materials thanks to the action of the burners 61 (schematically represented) located on two levels. In this zone the real burning of the materials take place. In particular, the burners 61 are incorporated in the burner beams cooled preferably by oil and are represented by lances (not shown), where a fuel flows inside that is mixed with the right quantity of comburent and ignited near the outlets of the burner beams.

The post-calcination zone 7 represents a zone where the material remains for an extended period of time to let the burnt material reach the adequate characteristics of reactivity and CO₂ residual.

The cooling zone 8 represents a zone where the transformed material is exposed to cold air coming from the bottom of the kiln.

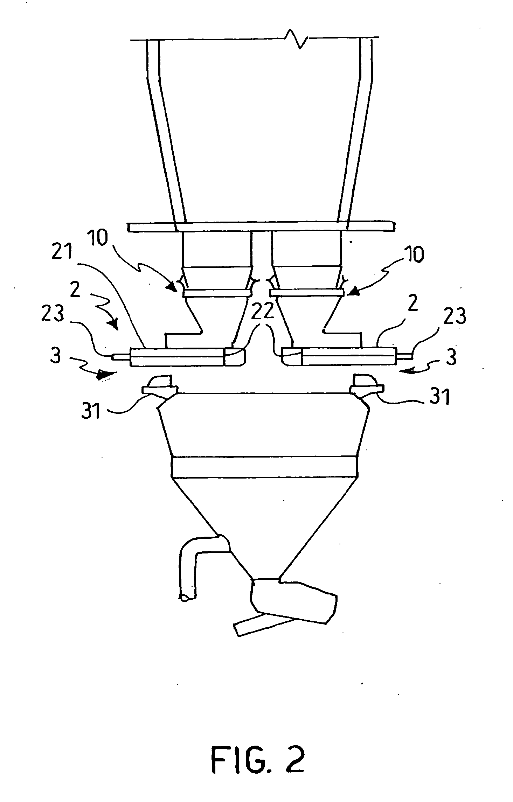

The discharging zone 9 represents a last zone of the kiln from where the finished product is automatically discharged through one or more conventional discharging hoppers 10 represented schematically in figures 1 and 2.

In particular, as better shown in figure 2, each discharging hopper 10 is coupled to a correspondent collecting means 2 of the burnt materials, such as conventional volumetric extraction means. Preferably, the conventional volumetric extractor 2 is represented by a volumetric discharging table including a box element 21 opened in the upper part, in order to receive the burnt material failing from the discharging hopper 10, and on one side to permit the discharge of the material. In particular, the discharging takes place through a wall 22 opposite to the discharge side and moved by a piston 23 to push the material to this discharging side like a paddle. It is to be noticed that the moving of the piston takes place when the table is filled of material, i.e. when the prefixed volume is reached. It results that the discharging of the material is performed in an accurate and constant way, it means after having reached the prefixed volume.

In correspondence of the discharging side of the volumetric collecting means 2, the weighing means 3, such as conventional weighing scales are located. The weighing means 3 receive the falling volume of material discharged by the collecting means 2 and record the weight of the collected material.

Finally, the weighing means 3, after having detected the weight, discharge the material in a collecting hopper 11, that at the end is equipped with a conventional system of extraction to feed a conveyor belt 12.

The control and command unit CCU, schematically represented in figure 3, can Include a conventional electronic processor with a memory where reference data are saved referred, for example, to a prefixed weight for each unit volume of material collected and discharged by the collecting means 2. Furthermore, the control and command unit CCU communicates with each weighing device 3 in order to receive electric or electromagnetic signals that, as above explained, are changed into numerical values by the processor, representative of the weight detected by each weighing device 3. The processor permits to compare the saved values with the values processed by the received signals in real time and automatically and signaling possible important variations.

From the above description, it is clear that the kiln 1 of the invention, advantageously permits an accurate control of the quantity of burnt material produced and, at the same time, a control of the quality of this material thanks to the combination of the weighing for a fixed volume.

Another advantage is given by the fact that the control and command unit CCU can be connected with the burners 61 in order to send the control signals to regulate the fuel and/or comburent flow and distribution in case that a weight variation of the material in the weighing means 3 is detected, as already explained. In other words, If the control and command unit CCU takes a weight higher than the pre-fixed weighting value, a signal to the burners is given, in order to increase the heating through a controlling loop. Furthermore the kiln is divided into several portions, as already explained before, is possible to detect weighing differences among these portions and command independently the burners so that the burning shall be uniform and an homogeneous product is obtained. For example, as already described before, in case that a portion of the kiln is exposed to strong winds that cause a local cooling to the external shell with a consequent lower burning degree, the command and control unit can act on the burners located in this portion to increase its efficiency. Alternatively, it is possible to regulate burners of the different portions of the kiln In order to obtain at the same time final products with different characteristics, for example reactivity, depending from the different needs, with only one kiln.

Preferably, the control and command unit can be connected with control means of the fuel and comburent distribution, such as valves, to each lance or group of lances housed inside the burner beams. In this way, the fine tuning regulation of the combustion process can be performed for each burner beam, avoiding lack of efficiencies and waste of fuel.

## Claims

1. Method for the control and the command of a kiln for the burning of lumped material includes the steps of:
a) providing a kiln having at least two sections ending with a respective discharge;
b) collecting of a prefixed volume unit of burnt material from each of the discharges;
c) weighing of this prefixed volume unit of burnt material;
d) sending an electric or electromagnetic signal to a control and command unit (CCU) indicating the weighing value for volume unit; and
e) comparing of the weighing value for prefixed volume unit with a pre-established weight value for this prefixed volume unit.

2. Method, according to the claim 1, where if the value detected in the step c) is higher than the prefixed value is made either a visual intervention to monitor the kiln and/or a maintenance of the kiln.

3. Method, according to the claims 1 or 2, including also a step, where said control and command unit sends electric or electromagnetic signals to the distribution means of fuel and/or conburent distribution to regulate the burning of these materials after the step e) of comparison.

4. Method, according to the claim 3, where this step is realized sending signals to regulation means of the fuel and comburent, such as the valves of said distribution means of fuel and/or comburent.

5. Method, according to anyone of the above claims from 1 to 4, where the step b) is realized through volumetric collecting means such as volumetric tables.

6. Method, according to anyone of the above claims from 1 to 5, where the step c) is realized through a weighing scale.

7. Method, according to anyone of the above claims from 1 to 6, where the control and command unit (CCU) comprises an electronic processor that receives said signals from weighing means (3) and convert them into numerical values, representative of the weight of the burnt material to compare them with pre-established numerical values.

8. Method, according to anyone of the above claims from 1 to 7, where this method is independently realized in one or more portions of the discharging zone of the burnt material.

9. Kiln (1) for the burning of the lumped materials comprising:
- at least two sections ending with a respective discharge;
said kiln comprising for each discharge:
- means (2) for the collection of a pre-established fixed volume of the lumped material after the calcination from each of the discharges;
- means (3) for the weighing of the material collected by these said collecting means;
- means for the comparison of the weighting value for prefixed volume unit with pre-established weight value for this prefixed volume unit.

10. Kiln (1) according to the claim 9, wherein a control and command unit(CCU) is connected to these weighing means (3) in order to receive electric and electromagnetic signals representing numerical values referred to the weight of the material collected by the collecting means and compare them with pre-established numerical values indicative of the weight of these materials.

11. Kiln (1) as per the claim 10, where this control and command unit (CCU) is connected also to the combustion means (61) in order to send signals of command to regulate the distribution of fuel and comburent inside the kiln.

12. Kiln (1) according to the claim 11, where the said combustion means (61) are represented by burner beams comprising lances for the distribution of the fuel and contained in boxes for each or groups of lances for the conburent distribution.

13. Kiln (1) according to the claim 12, where this control and command unit (CCU) sends signals to these means for the regulation of fuel and/or conburent of the said combustion means (61).

14. Kiln (1) according to anyone of the claims 9-13, comprising from top to the bottom along an almost vertical axis a charging zone (4), a pre-heating zone (5), at least two combustion zones (6), a post-calcination (7), a cooling zone (8), a discharging zone (9).

15. Kiln (1) according the claim 14, where the charging zone (4) includes a charging opening (41) equipped with an opening/closing conical plug (42) for the passage and the distribution of the lumped material in one or more pant legs (5) that distribute this material uniformly to the whole cross section of the kiln.

16. Kiln (1) according to anyone of the claims 14 or 15, where the discharging zone (9) includes one or more discharging hoppers (10) coupled to these collecting means (2).

17. Kiln (1) according to anyone of the claims from 9 to 16, where these collecting means (2) including a volumetric discharging table (21).

18. Kiln (1) according to anyone of the claims from 9 to 17, where these weighing means (3) including weighing scales (31) located in correspondence of the said collecting means (2) in order to receive the falling burnt material.

19. Kiln (1) according to anyone of the claims from 9 to 18, where the kiln is circular, semicircular, elliptical, square or rectangular section, a double shaft kiln, regenerative kiln or annular kiln.

## Patentansprüche

1. Verfahren zur Steuerung und Befehlsgabe für einen Ofen für die Verbrennung stückigen Materials umfassend folgende Schritte:
a) Bereitstellen eines Ofens, der wenigstens zwei Abschnitte hat, die in einem jeweiligen Ausgang enden;
b) Aufnehmen einer vorbestimmten Volumeneinheit verbrannten Materials aus jedem der Ausgänge;
c) Wiegen dieser vorbestimmten Volumeneinheit verbrannten Materials;
d) Senden eines elektrischen oder elektromagnetischen Signals zu einer Steuer- und Befehlseinheit (CCU), das den Wiegewert für die Volumeneinheit kennzeichnet; und
e) Vergleichen des Wiegewertes für die vorbestimmte Volumeneinheit mit einem zuvor eingerichteten Gewichiswert für diese vorbestimmte Volumeneinheit.

2. Verfahren nach Anspruch 1, bei dem, sofern der Wert, der bei Schritt c) erfasst wird, höher ist als der vorbestimmte Wert, entweder eine Sichtprüfung zur Überwachung des Ofens und/oder eine Wartung des Ofens erfolgt.

3. Verfahren nach Anspruch 1 oder 2. zudem umfassend einen Schritt, bei dem die Steuer- und Befehlseinheit elektrische oder elektromagnetische Signale zu der Verteilungseinrichtung der Brennstoff- und/oder Brennfördermittelverteilung, um die Verbrennung dieser Materialien zu regulieren, nach dem Schritt e) des Vergleichs sendet.

4. Verfahren nach Anspruch 3, bei dem dieser Schritt realisiert wird, indem Signale zu der Reguliereinrichtung von Brennstoff und Brennfördermittel, wie etwa den Ventilen der Verteilungseinrichtung von Brennstoff und/oder Brennfördermittel, gesendet werden.

5. Verfahren nach einem der obigen Ansprüche 1 bis 4, bei dem Schritt b) durch volumetrische Aufnahmeinrichtungen, wie etwa volumetrische Tische realisiert wird.

6. Verfahren nach einem der obigen Ansprüche 1 bis 5, bei dem der Schritt c) durch eine Gewichtsskala realisiert wird.

7. Verfahren nach einem der obigen Ansprüche 1 bis 6, bei dem die Steuer- und Befehlseinheit (CCU) einen elektronischen Prozessor enthält, der Signale von der Wiegeeinrichtung (3) empfängt und sie in numerische Werte umwandelt, die für das Gewicht des verbrannten Materials reprasentativ sind, um sie mit den zuvor eingerichteten numerischen Werten zu vergleichen.

8. Verfahren nach einem der obigen Ansprüche 1 bis 7, wobei dieses Verfahren unabhängig in wenigstens einem Abschnitt der Ausgabezone des verbrannten Materials realisiert wird.

9. Ofen für die Verbrennung stückiger Materialien, enthaltend:
- wenigstens zwei Abschnitte, die in einem jeweiligen Ausgang enden;
wobei der Ofen für jeden Ausgang enthält:
- eine Einrichtung (2) für die Aufnahme eines vorbestimmten Volumens des stückigen Materials nach der Kalzinierung aus jedem der Ausgänge;
- eine Einrichtung (3) für das Wiegen des Materials, das von dieser Auffnahmeeinrichtung aufgenommen wird: und
- Einrichtungen für den Vergleich des Wiegewertes für die vorbestimmte Volumeneinheit mit dem zuvor eingerichteten Gewichtswert für diese vorbestimmte Volumeneinheit.

10. Ofen (1) nach Anspruch 9, bei dem eine Steuer- und Befehlseinheit (CCU) mit diesen Wiegeeinrichtungen (3) verbunden ist, um elektrische und elektromagnetische Signale zu empfangen, die numerische Werte repräsentieren, die sich auf das Gewicht des Materials beziehen, das von der Aufnahmeeinrichtung aufgenommen wird, und diese mit den zuvor eingerichteten numerischen Werten zu vergleichen, die für das Gewicht dieser Materialien kennzeichnend sind.

11. Ofen (1) nach Anspruch 10, bei dem diese Steuer- und Befehlseinheit (CCU) zudem mit der Verbrennungseinrichtung (61) verbunden ist, um Befehlssignale zu Senden, um die Verteilung von Brennstoff und Brennfördermittel in dem Ofen zu regulieren,

12. Ofen (1) nach Anspruch 11, bei dem die Verbrennungseinrichtung (61) aus Brennstäben besteht, die Strahlrohre für die Verteilung des Brennstoffes enthalten und in Kammern für jedes Strahlrohr oder Gruppen von Strahlrohren für die Brennfördermittelverteilung enthalten sind.

13. Ofen (1) nach Anspruch 12, bei dem diese Steuer- und Befehlseinheit (CCU) Signale zu diesen Einrichtungen für die Regulierung von Brennstoff und/oder Brennfördermittel der Verbrennungseinrichtung (61) sendet.

14. Ofen nach einem der Ansprüche 9 bis 13, enthaltend von oben nach unten entlang einer beinahe vertikalen Achse eine Befüllzone (4), eine Vorwärmzone (5), wenigstens zwei Verbrennungszonen (6), eine Nachkalzlnierung (7), eine Kühlzone (8) und eine Ausgabezone (9).

15. Ofen (1) nach Anspruch 14,blei dem die Befüllzone (4) eine Befüllöffnung (41) enthält, die mit einem konischen Öffnungs-/Verschlusspropfen (42) für den Durchgang und die Verteilung des stückigen Materials in einem oder mehreren Hosenbeinen (5), die dieses Material gleichmäßig über den gesamten Querschnitt des Ofens verteilen.

16. Ofen (1) nach einem der Ansprüche 14 oder 15, bei dem die Ausgabezone (9) wenigstens einen Ausgabetrichter (10) enthält, der mit der Aufnahmeeinrichtung (2) verbunden ist.

17. Ofen (1) nach einem der Ansprüche 9 bis 16, bei dem die Aufnahmeeinrichtung (2) einen volumetrischen Ausgabetisch (21) enthält.

18. Ofen (1) nach einem der Ansprüche 9 bis 17, bei dem die Wiegeeinrichtung (3) Wiegeskalen (31) enthält, die in Korrespondenz mit der Aufnahmeeinrichtung (2) angeordnet sind, um das herabfallende verbrannte Material aufzunehmen.

19. Ofen (1) nasch einem der Ansprüche 9 bis 18, wobei der Ofen einen runden, halbrunden, elliptischen, quadratischen oder rechteckigen Querschnitt hat, ein Doppelschachtofen, ein regenerativer Ofen oder ein ringförmiger Ofen ist.

## Revendications

1. Procédé pour le contrôle et la commande d'un four pour la cuisson de matériau en morceaux, incluant les étapes consistant à :
a) fournir un four ayant au moins deux tronçons qui se terminent avec une décharge respective ;
b) collecter une unité volumétrique préfixée de matériau cuit provenant de chacune des décharges ;
c) peser cette unité volumétrique préfixée de matériau cuit ;
d) envoyer un signal électrique ou électromagnétique à une unité de contrôle et de commande (CCU) indiquant la valeur pesée par unité volumétrique; et
e) comparer la valeur pesée pour une unité volumétrique préfixée avec une valeur pondérale préétablie pour cette unité volumétrique préfixée.

2. Procède selon la revendication 1, dans lequel si la valeur détectée à l'étape c) est supérieure à la valeur préfixée on procède à une intervention visuelle pour surveiller le four et/ou une maintenance du four.

3. Procédé selon la revendication 1 ou 2, incluant également une étape selon laquelle ladite unité de contrôle et de commande envoie des signaux électriques ou électromagnétiques à des moyens de distribution de combustible et/ou de distribution de comburant pour réguler la combustion de ces matériaux après l'étape e) de comparaison.

4. Procédé selon la revendication 3, dans lequel cette étape est réalisée en envoyant des signaux à des moyens de régulation pour le combustible et le comburant, comme les valves desdits moyens de distribution de combustible et/ou de comburant.

5. Procédé, selon l'une quelconque des revendications précédentes 1 à 4, dans lequel l'étape b) est réalisée par des moyens de collecte volumétriques, comme des tables volumétriques.

6. Procédé selon l'une quelconque des revendications précédentes 1 à 5, dans lequel l'étape c) est réalisée au moyen d'une balance de pesage.

7. Procède selon l'une quelconque des revendications précédentes 1 à 6, dans lequel l'unité de contrôle et de commande (CCU) comprend un processeur électronique qui reçoit lesdits signaux provenant des moyens de pesage (3) et les convertit en valeurs numériques, représentatives du poids du matériau cuit, pour les comparer avec des valeurs numériques préétablies.

8. Procède selon l'une quelconque des revendications précédentes 1 à 7, dans lequel ce procédé est réalisé indépendamment dans l'une ou plusieurs portions de la zone de décharge du matériau cuit.

9. Four (1) pour la cuisson de matériaux en morceaux, comprenant :
- au moins deux tronçons qui se terminent par une décharge respective ; ledit four comprenant, pour chaque décharge :
- des moyens (2) pour la collecte d'un volume fixé préétabli de matériau en morceaux après la calcination provenant de chacune des décharges ;
- des moyens (3) pour peser le matériau collecté par ces moyens de collecte ;
- des moyens pour la comparaison de la valeur pesée pour l'unité volumétrique préfixée avec une valeur pondérale préétablie pour cette unité volumétrique préfixée.

10. Four (1) selon la revendication 9, dans lequel une unité de contrôle et de commande (CCU) est connectée à ces moyens de pesage (3) afin de recevoir des signaux électriques et électromagnétiques représentant des valeurs numériques qui se réfèrent au poids de matériau collecté par les moyens de collecte et les comparer avec des valeurs numériques préétablies indicatives du poids de ces matériaux.

11. Four (1) selon la revendication 10, dans lequel cette unité de contrôle et de commande (CCU) est également connectée aux moyens de combustion (61) afin d'envoyer des signaux de commande pour réguler la distribution de carburant et de comburant à l'intérieur du four.

12. Four (1) selon la revendication 11, dans lequel lesdits moyens de combustion (61) sont représentés par des faisceaux de brûleurs comprenant des lances pour la distribution de carburant et contenus dans des boîtes pour chaque lance ou chaque groupe de lances pour la distribution de comburant.

13. Four (1) selon la revendication 12, dans lequel cette unité de contrôle et de commande (CCU) envoie des signaux à ces moyens pour la régulation de carburant et/ou de comburant desdits moyens de combustion (61).

14. Four (1) selon l'une quelconque des revendications 9 à 13, comprenant, depuis le haut jusqu'au bas le long d'un axe pratiquement vertical : une zone de chargement (4), une zone de préchauffage (5), au moins deux zones de combustion (6), une zone de post-calcination (7), une zone de refroidissement (8), est une zone de décharge (9).

15. Four (1) selon la revendication 14, dans lequel la zone de chargement (4) inclut une ouverture de chargement (41) équipée d'un bouchon conique d'ouverture/fermeture (42) pour le passage et la distribution du matériau en morceaux dans une ou plusieurs culottes (5) qui distribuent ce matériau uniformément sur la totalité de la section transversal du four.

16. Four (1) selon l'une quelconque des revendications 14 ou 15, dans lequel la zone de décharge (9) inclut une ou plusieurs trémies de décharge (10) couplées à ces moyens de collecte (2).

17. Four (1) selon l'une quelconque des revendications 9 à 16, dans lequel lesdits moyens de collecte (2) incluent une table de décharge volumétrique (21).

18. Four (1) selon l'une quelconque des revendications 9 à 17, dans lequel lesdits moyens de pesage (3) incluent des balances de pesage (31) placées en correspondances desdits moyens de collecte (2) afin de recevoir le matériau cuit qui tombe.

19. Four (1) selon l'une quelconque des revendications 9 à 18, dans lequel le four a une section circulaire, semi-circulaire, elliptique, carrée ou rectangulaire, en ce qu'il s'agit d'un four à double fût, d'un four à régénération ou d'un four annulaire.
